# EUROPÄISCHE PATENTSCHRIFT

(11) **EP 0 729 048 B1**
(45) Veröffentlichungstag und Bekanntmachung des Hinweises auf die Patenterteilung: **15.04.1998**
(21) Anmeldenummer: 96810040.4
(22) Anmeldetag: 18.01.1996
(51) Int. Cl.: G02B 6/38, H01R 13/518

(54) **Steckeranordnung bestehend aus wenigstens zwei optischen Steckern**
Connector assembly consisting of at least two optical connectors
Assemblage de connecteurs consistant d'au moins deux connecteurs optiques

(30) Priorität: 21.02.1995 CH 503/95
(43) Veröffentlichungstag der Anmeldung: 28.08.1996
(73) Patentinhaber: DIAMOND S.A., CH-6616 Losone-Locarno (CH)
(72) Erfinder: De Marchi, Silverio, CH-6646 Contra (CH)
(74) Vertreter: Wenger, René

(56) Entgegenhaltungen:
- EP-A- 0 616 236
- WO-A-94/24592
- US-A- 5 123 071
- US-A- 5 268 982

## Beschreibung

Die Erfindung betrifft eine Steckeranordnung bestehend aus wenigstens zwei optischen Steckern gemäss dem Oberbegriff von Anspruch 1. Diese sogenannten Duplex-Stecker werden dort eingesetzt, wo gleichzeitig zwei Lichtwellenleiter angeschlossen werden müssen. Für die Herstellung einer möglichst dämpfungsarmen Lichtübertragung an der Steckverbindung ist es dabei von grosser Bedeutung, dass die beiden einzelnen Stekker nicht völlig starr miteinander verbunden sind, sondern dass jeder Stecker in einem begrenzten Mass eine Relativbewegung ausführen kann.

Für Steckverbindungen des Push-Pull-Typs, die international unter der Typenbezeichnung SC genormt sind bestehen bereits verschiedene Varianten zum Verbinden von zwei Einzelsteckern zu einer Duplex-Steckeranordnung. Gemäss der WO-94/24 592 wird wenigstens eine Klammer auf die beiden Steckergehäuse aufgeschnappt, welche jedes Steckergehäuse einzeln erfasst und welche einen bogenförmigen Verbindungssteg zwischen den beiden Einzelklammern aufweist. Gemäss der US-A-5,123,071 besteht die Verbindung aus zwei Bügeln, die zusammengeschnappt werden können und welche die beiden Stecker zwischen sich klemmend erfassen. Es ist aber aus der EP-A-597 501 auch bereits bekannt, die beiden Steckergehäuse der Einzelstecker ohne zusätzliche Hilfsmittel unmittelbar miteinander zu verbinden.

Die Stecker des Push-Pull-Typs haben den Nachteil, dass eine Zugkraft auf das Steckergehäuse ausgeübt werden muss, um die Steckverbindung wieder zu lösen. Es sind zwar beispielsweise durch die EP-A-616 236 bereits Einzelstecker bekannt geworden, bei denen die Steckverbindung mit Hilfe eines Entriegelungshebels gelöst werden kann. Diese Stecker könnten zwar mit konventionellen Verbindungsklammern zu einer Duplex-Einheit verbunden werden, doch müsste dann jeder Entriegelungshebel einzeln betätigt werden. Es ist daher eine Aufgabe der Erfindung, eine Steckeranordnung der eingangs genannten Art zu schaffen, bei der die Steckerverriegelung in der Buchse ohne Zugkraft mit einem einzigen Handgriff gelöst werden kann. Diese Aufgabe wird erfindungsgemäss mit einer Steckeranordnung gelöst, welche die Merkmale in Anspruch 1 aufweist.

Die beiden Einzelstecker sind mit einer Einrastvorrichtung versehen, welche nur mit einem Entriegelungshebel gelöst werden kann. Dieser Entriegelungshebel erfüllt jedoch eine Doppelfunktion, indem er auch noch als Verbindungseinrichtung zwischen den Steckern dient. Durch Betätigung des gemeinsamen Entriegelungshebels werden die Einrastvorrichtungen an den einzelnen Steckern simultan gelöst. Da der Entriegelungshebel an jedem Stecker beweglich gelagert ist, besteht trotzdem keine absolut starre Verbindung. Vorzugsweise ist der Entriegelungshebel ein Schwenkhebel, der an beiden Steckern um eine gemeinsame, im rechten Winkel zu den Steckerachsen verlaufende Achse schwenkbar gelagert ist. Die Montage wird dabei erleichtert, wenn der Schwenkhebel an jedem Stecker mit je zwei Gelenknocken gelagert ist. Denkbar wäre aber auch eine separate Achse, die sich durch beide Stecker erstreckt.

Theoretisch genügt bereits der gemeinsame Schwenkhebel, um die beiden Einzelstecker so miteinander zu verbinden, dass sie stets paarweise in eine entsprechende Buchsenanordnung eingesteckt werden können. Zum Stabilisieren der Achsparallelität ist es jedoch besonders vorteilhaft, wenn die Verbindungseinrichtung ein zusätzliches Verbindungselement aufweist. Das zusätzliche Verbindungselement kann dabei eine Verbindungsklammer sein, welche auf Aufnahmeabschnitte an den beiden Steckern aufschnappbar ist.

Vorzugsweise hat die Verbindungsklammer zwei U-förmige Klammerabschnitte, wobei zwischen den Klammerabschnitten ein Distanzkörper angeordnet ist, der zwischen den beiden Steckern liegt. Dieser Distanzkörper dient zu einem gewissen Grad zum Parallelhalten der beiden Stecker. Anderseits verbessert er aber auch die Griffigkeit beim Anfassen der Steckeranordnung.

Zur Erhöhung der Elastizität kann der Distanzkörper als Hohlkörper ausgebildet sein.

Eine besonders vorteilhafte Anordnung ergibt sich, wenn die gemeinsame Schwenkachse des Entriegelungshebels auf der gleichen oder annähernd auf der gleichen Ebene liegt, wie die beiden Klammerabschnitte des Verbindungselements. Die Verbindungsklammer wird dabei auf der dem Entriegelungshebel entgegengesetzten Seite auf die Stecker aufgeschnappt. Wenn sich der Distanzkörper gegen die kabelseitige Endpartie der Stecker erstreckt ist ausserdem gewährleistet, dass bereits diese relativ flexible Endpartie, die normalerweise einen Knickschutz aufweist, parallel gehalten wird.

Weitere Vorteile und Einzelmerkmale der Erfindung ergeben sich aus der nachfolgenden Beschreibung eines Ausführungsbeispiels und aus den Zeichnungen. Es zeigen:
- Figur 1: eine perspektivische Darstellung einer Steckeranordnung vor dem Zusammenbau,
- Figur 2: die Steckeranordnung gemäss Figur 1 im zusammengebauten Zustand,
- Figur 3: eine Buchsenanordnung für die Steckeranordnung gemäss Figur 2,
- Figur 4: einen Längsschnitt durch die Steckeranordnung gemäss Figur 2, und
- Figur 5: einen Längsschnitt durch die Buchsenanordnung gemäss Figur 3.

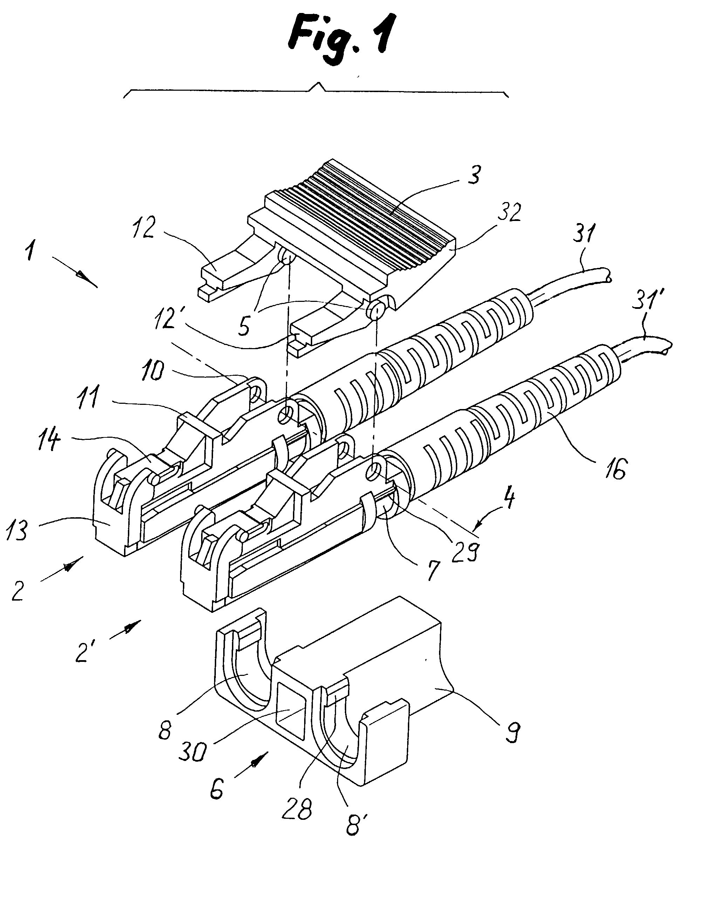

Figur 1 zeigt insgesamt eine Steckeranordnung 1, bestehend aus den beiden Einzelsteckern 2 und 2', aus einem gemeinsamen Entriegelungshebel 3, der sich auf der Oberseite über beide Stecker erstreckt und aus einem Verbindungselement 6, das von unten auf die beiden Stecker geschnappt wird.

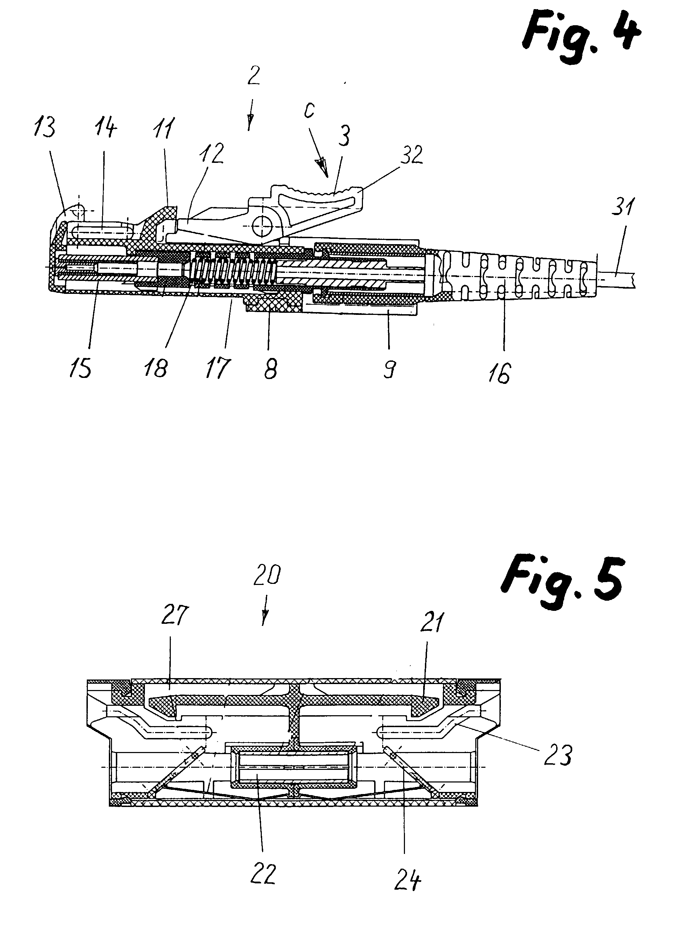

Weitere Einzelheiten über die Konstruktion der Stecker 2 und 2' ergeben sich aus Figur 4. Im übrigen wird auf die eingangs erwähnte EP-A-616 236 hingewiesen, welche diesen Typ der Einrastvorrichtung im Detail beschreibt. Im Steckergehäuse 17 ist ein Steckerstift 15 gelagert, der in Axialrichtung an einer Federanordnung 18 abgestützt ist. Das Lichtwellenleiterkabel 31 wird über einen Knickschutz 16 in das Steckergehäuse eingeführt und der hier nicht dargestellte Lichtwellenleiter ist im Steckerstift 15 zentrisch gefasst.

Die Stirnseite des Steckers 2 ist mit einer Schutzklappe 13 abgedeckt. Diese Schutzklappe kann an einem Schutzklappenlager 14 aufgeschwenkt und zurückgezogen werden. Zur Verriegelung in der Buchse dient eine Sperrleiste 11, die in das Steckergehäuse integriert ist. Seitliche Lagerelemente 10 bilden eine Art Lagergabel zur Aufnahme des Entriegelungshebels 3.

Der Entriegelungshebel 3 besteht aus einem Griffstück 32, das auf der Oberseite gerippt ist. Zwei separate Schwenkarme 12 und 12' sind so angeordnet, dass sie sich an jedem Stecker bis unmittelbar hinter die Sperrleiste 11 erstrecken. Auf jeder Seite eines Schwenkarms ist je ein Gelenknocken 5 angeordnet. Diese Gelenknocken können in die Oeffnungen an den Lagerelementen 10 eingerastet werden. Der Entriegelungshebel 3 ist in der eingebauten Position um eine gemeinsame Achse 4 schwenkbar. Diese Achse verläuft im rechten Winkel zur Längsmittelachse der beiden Stecker 2 und 2'.

Annähernd auf der gleichen vertikalen Ebene, auf welcher die gemeinsame Achse 4 liegt, ist jedes Steckergehäuse 17 auf der Aussenseite mit einem Aufnahmeabschnitt 7 versehen. Jeder Aufnahmeabschnitt ist dabei auf jeder Seite mit einer Leiste 29 versehen, welche parallel zur Steckerachse verläuft.

An den Aufnahmeabschnitten 7 wird das zusätzliche Verbindungselement 6 aufgeschnappt. Dieses besteht im wesentlichen aus zwei U-förmigen Klammerabschnitten 8 und 8', zwischen denen ein Distanzkörper 9 angeordnet ist. Die Klammerabschnitte 8 sind an den oberen Enden der U-Schenkel mit angeschrägten Nocken 28 versehen. Diese Nocken rasten hinter den Leisten 29 an den Aufnahmeabschnitten 7 ein. Ein Hohlraum 30 erstreckt sich über die gesamte Länge des Distanzkörpers 9. Die Seitenwände des Distanzkörpers verlaufen etwas gekrümmt und sind damit dem Endabschnitt der beiden Stecker angepasst. Die Höhe des Distanzkörpers ist etwas grösser als der Durchmesser dieser Endabschnitte, wie insbesondere aus Figur 4 ersichtlich ist.

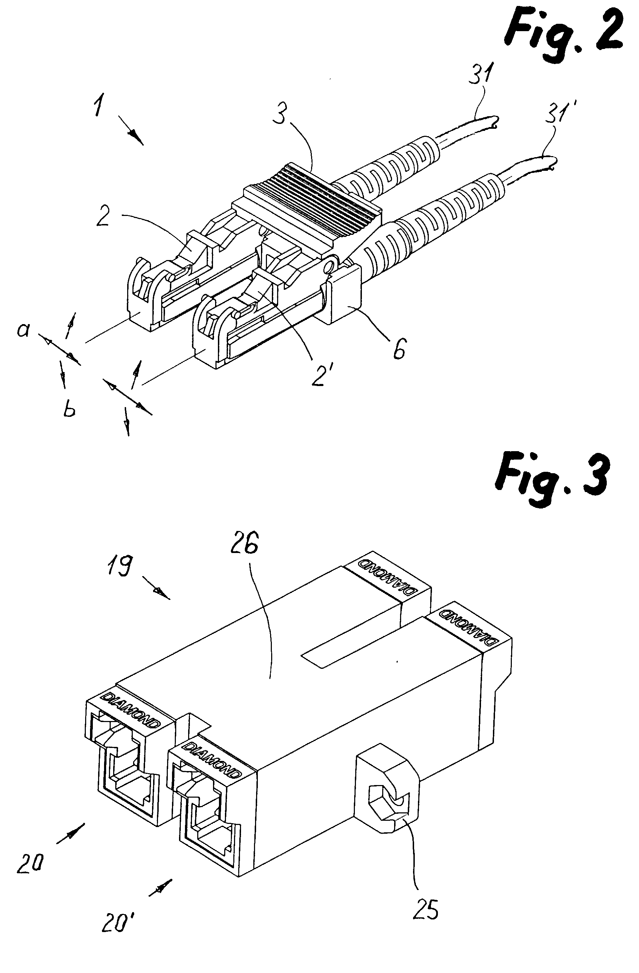

Die zusammengebaute Steckeranordnung 1 bildet eine kompakte, griffige Einheit, wobei der Entriegelungsmechanismum mit einem einzigen Handgriff betätigt werden kann. Wie in Figur 2 dargestellt ist, können die beiden Einzelstecker 2 und 2' in den Pfeilrichtungen a und b geringfügige Relativbewegungen ausführen. Dies ist für eine möglichst spannungsfreie Einführung in die dazugehörige Buchsenanordnung 19 erforderlich.

Gemäss Figur 3 besteht eine derartige Buchsenanordnung aus den beiden Buchsen 20 und 20', die über einen Materialsteg 26 einstückig miteinander verbunden sind. Auf jeder Seite ist je ein Befestigungsflansch 25 angeordnet, an dem die Buchsenanordnung beispielsweise an einer Gehäusewand fixiert werden kann.

Einzelheiten einer Buchse 20 ergeben sich aus Figur 5, wobei diesbezüglich ebenfalls auf die EP-A-616 236 verwiesen wird.

Im Buchsengehäuse 27 ist auf jeder Steckerseite eine federnde Sperrklinke 21 angeordnet. Beim Erreichen der endgültigen Steckposition, rastet diese Sperrklinke hinter die Sperrleiste 11 am Stecker. Eine Führungskulisse 23 öffnet beim Einstecken die Schutzklappe 13 an der Stirnseite des Stekkers, so dass der Steckerstift 15 in eine Zentrierhülse 22 eindringen kann. Beim Einstecken wird eine federnd gelagerte Blende 24 nach unten geklappt. Zum Entriegeln der Einrastvorrichtung wird an der Steckeranordnung in Pfeilrichtung c (Figur 4) Druck auf das Griffstück 32 ausgeübt. Dabei heben die beiden Schwenkarme 12 und 12' die den einzelnen Steckern zugeordneten Sperrklinken 21 über die Sperrleisten 11 und die Steckeranordnung kann mit einer normalen Zugkraft ausgesteckt werden, bei der nur noch die Reibung der einzelnen Bauteile überwunden werden muss.

Selbstverständlich könnte der Entriegelungshebel 3 auch eine andere Konfiguration aufweisen. Je nach Art der Einrastvorrichtung könnte es sich beispielsweise auch um einen Hebel handeln, der anstelle einer Schwenkbewegung eine Linearebewegung ausführt. Auch das zusätzliche Verbindungselement müsste nicht unbedingt als Verbindungsklammer ausgebildet sein. Es könnte sich dabei auch um ein Element handeln, das auf andere Weise an den beiden Steckergehäuse angreift. In bestimmten Fällen wäre es denkbar, mehr als zwei Stecker auf die gleiche Art und Weise zu einer Steckeranordnung zu verbinden, an der die Einrastvorrichtung mit einem einzigen Entriegelungshebel gelöst werden kann. Die Steckergehäuse, der Entriegelungshebel und das Verbindungselement bestehen vorzugsweise aus Kunststoffmaterial. Auch eine Ausführung in Metall wäre aber denkbar.

## Patentansprüche

1. Steckeranordnung (1) bestehend aus wenigstens zwei optischen Steckern (2, 2'), die mittels einer Verbindungseinrichtung im Abstand zueinander im Wesentlichen achsparallel zu einer Steckereinheit verbunden sind und die zum zugfesten Einrasten in einem Buchsenteil je eine Einrastvorrichtung aufweisen, dadurch gekennzeichnet, dass ein gemeinsamer Entriegelungshebel (3) als Verbindungseinrichtung ausgebildet, ist, mit dessen Hilfe die Einrastvorrichtung jedes Steckers lösbar ist und der sich mit einem Abschnitt über beide Stecker (2, 2') erstreckt, wobei er an jedem Stecker beweglich befestigt ist.

2. Steckeranordnung nach Anspruch 1, dadurch gekennzeichnet, dass der Entriegelungshebel ein Schwenkhebel ist, der an beiden Steckern um eine gemeinsame Achse (4) schwenkbar gelagert ist, welche im rechten Winkel zur Längsmittelachse der Stecker verläuft.

3. Steckeranordnung nach Anspruch 2, dadurch gekennzeichnet, dass der Schwenkhebel an jedem Stecker mit je zwei Gelenknocken (5) gelagert ist.

4. Steckeranordnung nach einem der Ansprüche 1 bis 3, dadurch gekennzeichnet, dass die Verbindungseinrichtung zum Stabilisieren der Achsparallelität ein zusätzliches Verbindungselement (6) aufweist.

5. Steckeranordnung nach Anspruch 4, dadurch gekennzeichnet, dass das zusätzliche Verbindungselement eine Verbindungsklammer ist, welche auf Aufnahmeabschnitte (7) an den beiden Steckern (2, 2') aufschnappbar ist.

6. Steckeranordnung nach Anspruch 5, dadurch gekennzeichnet, dass die verbindungsklammer zwei U-förmige Klammerabschnitte (8, 8') aufweist, und dass zwischen den Klammerabschnitten ein Distanzkörper (9) angeordnet ist, der zwischen den beiden Steckern liegt.

7. Steckeranordnung nach Anspruch 6, dadurch gekennzeichnet, dass der Distanzkörper (9) als Hohlkörper ausgebildet ist.

8. Steckeranordnung nach einem der Ansprüche 2 oder 3 und einem der Ansprüche 6 oder 7, dadurch gekennzeichnet, dass die Verbindungsklammer auf der dem Entriegelungshebel (3) entgegengesetzten Seite auf die Stecker (2, 2') aufgeschnappt ist und dass die gemeinsame Achse (4) dabei etwa gegenüber den Klammerabschnitten liegt.

9. Steckeranordnung nach Anspruch 8, dadurch gekennzeichnet, dass der Distanzkörper (9) zwischen den kabelseitigen Endabschnitten der Stecker (2, 2') angeordnet ist.

## Claims

1. A plug arrangement (1) comprising at least two optical plugs (2, 2') which are connected by means of a connecting device at a spacing relative to each other with their axes substantially parallel to form a plug unit and which each have a respective latching device for tensile force-resistant latching in a socket member, characterised in that provided as the connecting device is a common unlocking member (3), by means of which the latching device of each plug is releasable and which extends with a portion over both plugs (2, 2'), wherein it is secured movably to each plug.

2. A plug arrangement according to claim 1 characterised in that the unlocking lever is a pivotal lever which is mounted on both plugs pivotably about a common axis (4) which extends at a right angle to the longitudinal centre line of the plugs.

3. A plug arrangement according to claim 2 characterised in that the pivotal lever is mounted on each plug by a respective pair of pivot projections (5).

4. A plug arrangement according to one of claims 1 to 3 characterised in that the connecting device has an additional connecting element (6) to stabilise axis parallelism.

5. A plug arrangement according to claim 4 characterised in that the additional connecting element is a connecting clip which can be snap-fitted on to receiving portions (7) on the two plugs (2, 2').

6. A plug arrangement according to claim 5 characterised in that the connecting clip has two U-shaped clip portions (8, 8') and that disposed between the clip portions is a spacer body (9) which is disposed between the two plugs.

7. A plug arrangement according to claim 6 characterised in that the spacer body (9) is in the form of a hollow body.

8. A plug arrangement according to one of claims 2 and 3 and one of claims 6 and 7 characterised in that the connecting clip is snap-fitted on to the plugs (2, 2') on the side opposite to the unlocking lever (3) and that the common axis (4) in that case is disposed approximately opposite the clip portions.

9. A plug arrangement according to claim 8 characterised in that the spacer body (9) is arranged between the end portions of the plugs (2, 2'), that are towards the cables.

## Revendications

1. Dispositif formant connecteur (1) formé d'au moins deux connecteurs optiques (2, 2') qui sont reliés à l'aide d'un dispositif de liaison, espacés l'un de l'autre et globalement parallèlement à l'axe, en une unité formant connecteur et qui comportent chacun, en vue d'un encliquetage résistant à la traction dans un élément formant alvéole, un dispositif d'encliquetage, caractérisé en ce qu'il est prévu, comme dispositif de liaison, un levier de déverrouillage commun (3) à l'aide duquel le dispositif d'encliquetage de chaque connecteur peut être libéré et qui s'étend avec une section sur les deux connecteurs (2, 2'), ledit levier de déverrouillage étant fixé, mobile, à chaque connecteur.

2. Dispositif formant connecteur selon la revendication 1, caractérisé en ce que le levier de déverrouillage est un levier pivotant qui est monté sur les deux connecteurs pour pouvoir pivoter autour d'un axe commun (4) qui s'étend à angle droit par rapport à l'axe médian longitudinal des connecteurs.

3. Dispositif formant connecteur selon la revendication 2, caractérisé en ce que le levier pivotant est monté à l'aide de deux saillies d'articulation (5) sur chaque connecteur.

4. Dispositif formant connecteur selon l'une des revendications 1 à 3, caractérisé en ce que le dispositif de liaison présente, pour stabiliser le parallélisme à l'axe, un élément de liaison supplémentaire (6).

5. Dispositif formant connecteur selon la revendication 4, caractérisé en ce que l'élément de liaison supplémentaire est une bride de liaison qui est apte à être montée par ressort sur des sections de réception (7) des deux connecteurs (2, 2').

6. Dispositif formant connecteur selon la revendication 5, caractérisé en ce que la bride de liaison présente deux sections de bride en U (8, 8') et en ce qu'il est prévu, entre les sections de bride, un organe d'écartement (9) qui se trouve entre les deux connecteurs.

7. Dispositif formant connecteur selon la revendication 6, caractérisé en ce que l'organe d'écartement (9) est conçu comme un corps creux.

8. Dispositif formant connecteur selon la revendication 2 ou 3 et selon la revendication 6 ou 7, caractérisé en ce que la bride de liaison est montée par ressort sur les connecteurs (2, 2') sur le côté opposé au levier de déverrouillage (3), et en ce que l'axe commun (4) se trouve à peu près à l'opposé des sections de bride.

9. Dispositif formant connecteur selon la revendication 8, caractérisé en ce que l'organe d'écartement (9) est disposé entre les sections d'extrémité des connecteurs (2, 2') situées du côté des câbles.
